# EUROPÄISCHE PATENTANMELDUNG

(11) **EP 0 928 901 A1**
(43) Veröffentlichungstag der Anmeldung: **14.07.1999**
(21) Anmeldenummer: 99100143.9
(22) Anmeldetag: 08.01.1999
(51) Int. Cl.: F16B 13/12

(54) **Spreizelement mit beabstandeten Spreizzonen**

(30) Priorität: 09.01.1998 DE 19800581
(71) Anmelder: EJOT Kunststofftechnik GmbH & Co. KG, D-57319 Bad Berleburg (DE)
(72) Erfinder: Block, Klaus, Dr., 44141 Dortmund (DE); Tiemann, Joachim, Dipl.-Ing., 59846 Sundern (DE)
(74) Vertreter: Geissler, Bernhard, Dr.jur., Dipl.-Phys.

(57) **Zusammenfassung**

Dübelsystem, aufweisend eine Dübelhülse mit einer ersten und einer zweiten Spreizzone, insbesondere zur Anwendung bei zweischaligen Mauerwerken, und ein Spreizelement mit einem Kopf und mit einem ersten Spreizabschnitt, der mit einem Gewinde versehen ist und mit einem zweiten, dem Kopf zugewandten Spreizabschnitt, wobei im montierten Zustand die erste Spreizzone mit dem ersten Spreizabschnitt und die zweite Spreizzone mit dem zweiten Spreizabschnitt unter Erzielung einer Spreizwirkung zusammenwirken und der zweite Spreizabschnitt durch einen Bereich vergrößerten Durchmessers gebildet ist, wobei der zweite Spreizabschnitt so ausgebildet ist, daß dieser beim Einschrauben des ersten Spreizabschnittes in die erste Spreizzone nur durch die Zugkraftwirkung des mit dem Gewinde versehenen ersten Spreizabschnittes des Spreizelementes in die zweite Spreizzone eingezogen wird.

## Beschreibung

Die vorliegende Erfindung betrifft ein Dübelsystem, versehen mit einer Hülse, die eine erste und eine zweite Spreizzone aufweist und mit einem Spreizelement, das einen ersten, mit einem Gewinde versehenen Spreizabschnitt und einen zweiten Spreizabschnitt, der durch einen Bereich vergrößerten Durchmessers gebildet wird, besitzt.

Zum Stand der Technik gehört ein Dübelsystem, dessen bevorzugtes Anwendungsgebiet bei zweischaligen Mauerwerken besteht, bei denen beispielsweise zwischen einer tragenden Wand und einer Klinkerfassade ein Hohlraum besteht. Zu diesem Zweck weist gemäß Offenlegungsschrift DE 195 44 970 eine Hülse eine erste Spreizzone an deren vorderem Endbereich auf, mit der der Dübel in der tragenden Wand verankert wird, wodurch die Fassade gegen Windsog gesichert wird. Eine zweite Spreizzone, die gemäß dieser Druckschrift mit Vorsprüngen ausgestattet ist, wird in der Fassade verankert, so daß eine Abstützung der Fassade gegenüber der Wand erfolgt. Desweiteren weist das Dübelsystem gemäß der Druckschrift DE 195 44 970 ein in die Hülse einbringbares Spreizelement auf, das zwei voneinander beabstandete Gewindeabschnitte unterschiedlichen Durchmessers, aber derselben Gewindesteigung, aufweist. Damit soll bei einem zweischaligen Mauerwerk beim Einschrauben des Spreizelementes der Dübel in der tragenden Wand und in der Fassade verankert werden. Es soll so die Montagesicherheit erhöht werden.

Beim Einsatz dieser bekannten Dübelsysteme wurde vom Erfinder folgendes festgestellt:

Aufgrund der Eigenschaft, daß beide Bereiche Gewinde aufweisen, kann es zu einer Fehlsimulation einer festen Verankerung des Dübels im vorderen Spreizbereich kommen. Beim Eindrehen des Spreizelementes greift und spreizt z.B. nur der hintere, dem Stiftkopf zugewandte Gewindeabschnitt und führt zu einer Spreizung der hinteren Spreizzone der Hülse, die sich in der Fassade befindet, auch ohne eine zuverlässige Verankerung der vorderen Spreizzone des Dübels in der tragenden Wand, die z.B. in einem Hohlraum wirkungslos gespreizt wird.

Die vorliegende Erfindung beruht auf der Erkenntnis des vorstehend beschriebenen Nachteils des bekannten Dübelsystems.

Eine Probe, ob der vordere Spreizbereich den Dübel zuverlässig in der tragenden Wand bei einem zweischaligen Mauerwerk verankert, ist bei dieser Ausführungsform nur schwer möglich.

Die Erfindung steht deshalb vor der Aufgabe, ein Dübelsystem der genannten Art zu schaffen, das ein Spreizelement aufweist, dergestalt, daß eine Fehlsimulation des Einzugs vermieden wird und somit die Montagesicherheit deutlich erhöht wird.

Erfindungsgemäß werden ein Dübelsystem und ein Spreizelement zur Verfügung gestellt, wie sie in den unabhängigen Ansprüchen definiert sind. Zweckmäßige Weiterbildungen sind in den Unteransprüchen angegeben.

Erfindungsgemäß weist das Dübelsystem eine Dübelhülse mit einer ersten und einer zweiten Spreizzone auf und ein Spreizelement mit einem Kopf und mit einem ersten, mit einem Gewinde versehenen Spreizabschnitt und einem zweiten, dem Kopf zugewandten Spreizabschnitt, der durch einen Bereich vergrößerten Durchmessers gebildet ist. Im montierten Zustand wirkt unter Erzielung einer Spreizwirkung die erste Spreizzone der Hülse mit dem ersten Spreizabschnitt des Spreizelements und die zweite Spreizzone der Hülse mit dem zweiten Spreizabschnitt des Spreizelements zusammen.

Der zweite Spreizabschnitt des Spreizelements, der durch einen Bereich vergrößerten Durchmessers gebildet ist, ist dergestalt ausgebildet, daß er beim Einschrauben des ersten Spreizabschnittes in die erste Spreizzone nur durch die Zugkraftwirkung des mit dem Gewinde versehenen ersten Spreizabschnittes des Spreizelementes in die zweite Spreizzone der Hülse eingezogen wird.

Der zweite Spreizabschnitt und die zweite Spreizzone stehen also vorzugsweise nicht in einer zu dem Gewinde des ersten Spreizabschnittes gleichsinnigen Schraubverbindung miteinander, bevorzugt hat der zweite Spreizabschnitt kein Gewinde.

Wird beim Eindrehen des Spreizelementes in die Hülse der zweite Spreizabschnitt des Spreizelementes nicht in die zweite Spreizzone der Hülse eingezogen, so ist davon auszugehen, daß die erste Spreizzone, die am tiefsten in der Bohrung eingebracht ist, den Dübel nicht zuverlässig im Mauerwerk verankert. Eine Fehlsimulation einer festen Verankerung wird somit vermieden.

Allgemein eignen sich erfindungsgemäße Dübelsysteme besonders für den Einsatz in zweischaligen Mauerwerken und Natursteinfassaden, bei denen beispielsweise zwischen einer tragenden Wand und einer Klinker- oder Natursteinfassade ein Hohlraum oder eine Dämmschicht besteht. Speziell bei einer nachträglichen Sicherung derartiger Fassaden ist es ungewiß, ob sich in der tragenden Wand eine regelmäßige Bohrung mit gleichmäßigem Durchmesser einbringen läßt. Ist beispielsweise die tragende Wand dergestalt, daß eine Bohrung zum Einbringen einer Dübelhülse unmöglich und die Dübelhülse beim Versuch des Einbringens an der tragenden Wand abknickt, so wird das Einschrauben des erfindungsmäßigen Spreizelementes unmöglich. Ist die tragende Wand z.B. aus Hohlbaustoffen, so besteht die Gefahr, daß beim Bohren eine Bohrung mit unregelmäßigem und zu großem Durchmesser entsteht und somit eine zuverlässige Verankerung in der tragenden Wand nicht gewährleistet wird. Der Dübel hat zuviel Spiel in der tragenden Wand. Auch hier kann das Spreizelement eventuell nicht vollständig in die Dübelhülse eingebracht werden.

Bei einer vorteilhaften Ausführungsform weist der zweite Spreizabschnitt des Spreizelements eine Profilierung in Form von Rillen auf. Dabei können die Rillen umlaufen und äquidistant angeordnet sein. Dadurch wird eine gleichmäßige Spreizwirkung in der zweiten Spreizzone erzielt.

Ein erfindungsgemäßes Spreizelement kann auch eine Profilierung in Form von Kegelstümpfen aufweisen, deren Achse mit der Achse des Spreizelements zusammenfällt und die in axialer Richtung beabstandet angeordnet sind, so daß die Basen der Kegelstümpfe in Richtung des Spreizelementkopfes liegen. Damit wird eine "Widerhakenwirkung" erzielt, die in erster Linie die Aufgabe erfüllt, Druckkräfte aufzunehmen. So wird die Abstützung der Fassade gegenüber der tragenden Wand realisiert. Die "Widerhakenwirkund" erzielt weiterhin, daß die Kraft, die aufzuwenden wäre, um das Spreizelement nach erfolgter, zuverlässiger Montage wieder aus der Dübelhülse zu entfernen, erheblich größer ist, als die Kraft, die bei der Montage aufgebracht werden mußte.

Erfindungsgemäß ist die Dübelhülse des Dübelsystems eine zylindrische Hülse, die mit einer ersten geschlitzten Spreizzone und mit einer, in Richtung auf die Einführöffnung folgenden zweiten Spreizzone mit Ausnehmungen und Vorsprüngen versehen ist, wobei die Vorsprünge der zweiten Spreizzone derart in den Ausnehmungen versenkbar sind, daß sie in die Bohrung der Hülse hineinragen.

Besonders günstig ist es, die Vorsprünge der zweiten Spreizzone der Dübelhülse derart an dem Schlitz bzw. den Schlitzen der ersten Spreizzone der Dübelhülse zu orientieren, daß die Spreizwirkung vom geschlitzten Bereich und den Vorsprüngen versetzt zueinander erfolgt, beispielsweise um etwa 90° versetzt.

In einer vorteilhaften Ausführungsform sind die Vorsprünge der zweiten Spreizzone der Dübelhülse als Flügel ausgeformt, wobei die Flügel entlang einer, im wesentlichen parallel zur Dübelachse verlaufenden Schwenkachse, derart verschwenkbar sind, daß sie vor dem Einführen eines stabartigen, erfindungsgemäßen Spreizelementes in die Bohrung der Hülse derart in den Ausnehmungen versenkbar sind, daß sie in die Bohrung der Hülse hineinragen, und daß sie nach dem Einführen des Spreizelementes von diesem in ihrer Spreizposition gehalten werden.

Vorteilhaft ist es darüber hinaus, wenn die zweite Spreizzone der Dübelhülse mindestens zwei flügelartig bzw. flügelförmig ausgebildete Vorsprünge besitzt, die in einem, im wesentlichen in axialer Richtung verlaufenden, Scharnierbereich mit der Hülse verbunden und im wesentlichen in derselben Höhe angeordnet sind. Diese Flügel springen in ihrer Spreizposition in Umfangrichtung, vorzugsweise in derselben Richtung, hervor und sind einstückig mit der Hülse ausgebildet. Die Flügel können auch in der ersten Spreizzone der Dübelhülse anstelle einer geschlitzten Spreizzone vorgesehen sein.

In einem solchen Dübelsystem erfolgt beim Einbringen des Spreizelementes eine Spreizung ohne axiale Stauchung. Es erfolgt deswegen beim Spreizen auch keine Relativbewegung zwischen Dübelhülse und Verankerungszone. Somit eignet sich dieses Dübelsystem besonders zur Verankerung in zwei unterschiedlichen, voneinander beabstandeten Ebenen oder Werkstoffen, beispielsweise bei zweischaligen Mauerwerken.

In einer bevorzugten Ausführungsform hat die einer Verankerungszone zugewandte Oberfläche eines Flügels im gespreizten Zustand, in axialer Richtung gesehen, einen im wesentlichen konstanten Abstand zur Achse der Hülse.

Die beiden Flügel der Hülse können in axialer Richtung zueinander versetzt sein, so daß die Stirnseiten sich in unterschiedlichen Höhen befinden. Dadurch entsteht in den oberen und unteren Ansätzen des Scharnierbereichs der Flügel ein verhältnismäßig breiter Steg, der der Festigkeit der Hülse förderlich ist.

Bevorzugt sind die Flügel in axialer Richtung länger als der Außendurchmesser der Hülse. Besonders bevorzugt beträgt diese Länge das 1,5-fache bis 10-fache des Außendurchmessers der Hülse.

Bei einer vorteilhaften Ausführungsform ist die Abmessung der seitlichen Flügel in Umfangrichtung, gemessen an der stirnseitigen, der Hülsenöffnung zugewandten Kante, zwischen 1/7 und 1/3 des Hülsenumfanges.

Die Flügel können mit einer Profilierung versehen sein. Dadurch ist in einem harten Untergrund eine Materialverdrängung beim Pressen der Flügel an die Verankerungszone möglich. Dabei kann die Profilierung als eine Vielzahl von schmalen Vorsprüngen ausgestattet sein, die sich deutlich von den Flügeloberflächen erheben. Dadurch werden die Flügel beim Einführen des Dübels in eine Bohrung, besonders stark in die Hülsenbohrung, eingedrückt. Beim anschließenden Einführen des Spreizelementes in die Hülsenbohrung werden die Flügel vollständig aus der Bohrung verdrängt, wodurch die Vorsprünge besonders stark in die Verankerungszone, gegebenenfalls unter Verformung angepreßt werden.

Die Flügel können sich auch in Einführrichtung der Hülse verjüngen, wobei sie hierbei vorzugsweise gleichzeitig, entgegen der Drehrichtung des Spreizelementes angeschrägt sind und die Schräge abgerundet ist. Diese Schrägen der Flügel erleichtern das Einführen der Hülse in einen Werkstoff.

In einer weiteren Ausführungsform ist die Dübelhülse an ihrer Einführöffnung mit einer Druckplatte versehen. Diese Ausführungsform eignet sich zum Anbringen von Dämmstoffplatten an Gebäudewänden.

Vorzugsweise besitzt die erfindungsgemäße Dübelhülse zwischen ihrer ersten und ihrer zweiten Spreizzone einen Schaftbereich ohne Spreizzone, in welcher wenigstens ein Bereich zum Abtropfen von Wasser (z.B. eine Abtropflippe) angeordnet ist. In diesem Bereich kann sich Kondenswasser sammeln und nach unten abtropfen, anstatt unerwünschterweise in die Werkstoffschichten einzudringen. Erfindungsgemäß können die Vorsprünge der zweiten Spreizzone der Dübelhülse nah an der Einführöffnung für das Spreizelement angeordnet werden, ohne daß die Stabilität des Dübels zu stark beeinträchtigt wird. Werden Flügel als Spreizzone der Dübelhülse anstelle einer geschlitzten Spreizzone vorgesehen, können diese vorzugsweise in Materialien eingesetzt werden, bei denen ungewiß ist, ob sich eine regelmäßige Bohrung mit gleichmäßigem Durchmesser einbringen läßt, wie z.B. Hohlbaustoffe. Dies gilt beispielsweise bei Hochlochziegeln, deren massiver Kern zunehmend kleiner gestaltet wird, so daß beim Bohren die verbleibenden, relativ dünnen Stege beschädigt werden können. In diesem Fall gewährleistet die oberflächennahe Spreizzone der erfindungsmäßigen Hülse, daß dennoch eine zuverlässige Verankerung in der Außenwand des Steins erfolgt. Der Abstand zwischen Vorsprung und Einführöffnung der Hülse kann weniger als 1/10 der Hülsenlänge betragen. Vorteilhafterweise lassen sich erfindungsgemäße Dübelhülsen schaffen, die besonders lange Spreizzonen für eine sichere Verankerung in Lochsteinen aufweisen.

Erfindungsgemäß wird auch ein Verfahren zur Befestigung von Fassadenabschnitten an tragenden Wänden zur Verfügung gestellt. Bei diesem Verfahren wird eine Dübelhülse mit zwei Spreizzonen durch eine Öffnung in der Fassade hindurch in eine Öffnung in der tragenden Wand derart eingeführt, daß die erste Spreizzone der Dübelhülse innerhalb der Öffnung der tragenden Wand und die zweite Spreizzone der Dübelhülse innerhalb der Öffnung in der Fassade zu liegen kommt. Dies wird durch eine "Einschlagsicherung" in der Dübelhülse verwirktlicht, die es erlaubt, das Spreizelement in axialer Einschlagbewegung aufzunehmen und zu sperren. Durch Hammerschläge auf den Kopf des Spreizelementes kann folglich die Dübelhülse in der Fassade positioniert werden. Diese "Einschlagsicherung" ist so ausgebildet, daß sie zu keiner Erhöhung des Eindrehwiderstandes des Spreizelementes bei anschließender schraubender Montage führt. Wird ein Spreizelement mit einem ersten Spreizabschnitt, der mit Gewinde versehen ist, in die erste Spreizzone der Dübelhülse geschraubt, wodurch ein zweiter, dem Kopf des Spreizelementes zugewandter Spreizabschnitt des Spreizelementes in die zweite Spreizzone der Dübelhülse gezogen und so die zweite Spreizzone der Dübelhülse aufgeweitet und in festen Kontakt mit der Fassade gebracht wird, wobei gleichzeitig auch die erste Spreizzone der Dübelhülse aufgeweitet und in festen Kontakt mit der tragenden Wand gebracht wird.

Weitere Vorteile, Merkmale und Anwendungsmöglichkeiten der Erfindung ergeben sich aus der nachfolgenden Beschreibung der Ausführungsbeispiele in Verbindung mit den Zeichnungen. Es zeigen:
- Fig. 1: Zwei Spreizelemente, die beide unterhalb des Kopfes eine Profilierung aufweisen,
- Fig. 2: Ein Spreizelement mit aufgebrachter Kunststoffumspritzung,
- Fig. 3: Zwei um 90° gegeneinander verdrehte Darstellungen einer Dübelhülse,
- Fig. 4: Zwei in beabstandete Werkstoffe eingebrachte Dübel,
- Fig. 5: Ein in beabstandete Werkstoffe eingebrachter Dübel mit Kragenkopf.

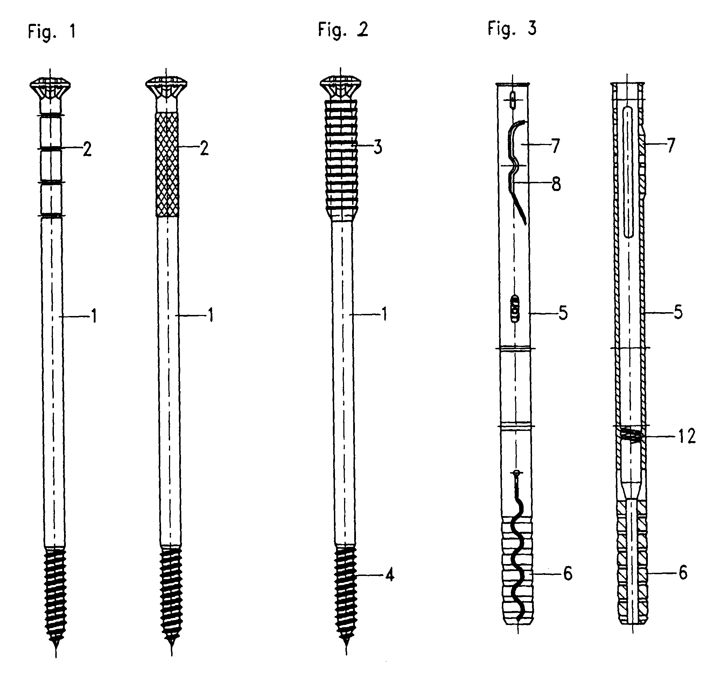

In Fig. 1 sind zwei Spreizelemente 1 dargestellt, die beide unterhalb des Spreizelementkopfes eine Profilierung 2 aufweisen. Die Profilierung dient dazu, eine vorteilhafterweise aufzubringende Kunststoffumspritzung formschlüssig aufzunehmen. Die Profilierung auf dem Spreizelementschaft kann in unterschiedlichsten Formen gestaltet werden. In Fig. 1 sind zwei Beispiele dargestellt - links ist die Profilierung in Form von umlaufenden, entlang der Spreizelementhauptachse beabstandeter und parallel zueinander angeordneter Rillen ausgestaltet; rechts dagegen weist die Profilierung eine Art Rautenmuster auf.

Fig. 2 zeigt ein Spreizelement 1, nachdem die vorteilhafte Kunststoffumspritzung 3 aufgebracht wurde. Das Spreizelement mit aufgebrachter Kunststoffumspritzung weist erfindungsgemäß nun einen ersten, mit einem Gewinde versehenen Spreizabschnitt 4 und einen zweiten Spreizabschnitt 3, der mit Hilfe der Kunststoffumspritzung durch einen Bereich vergrößerten Durchmessers gebildet wird, auf. Die Kunststoffumspritzung auf dem Spreizelement 1 im zweiten Spreizabschnitt 3 weist eine Profilierung in Form von Kegelstümpfen auf, deren Achse mit der Achse des Spreizelementes zusammenfällt und die in axialer Richtung äquidistant zueinander angeordnet sind, so daß die Basen der Kegelstümpfe in Richtung des Spreizelementkopfes liegen. Dadurch wird bewirkt, daß wirkende Druckkräfte aufgenommen werden.

In Fig. 3 sind zwei Dübelhülsen 5 dargestellt, die zueinander in einem Winkel von 90° verdreht sind. Beide Dübelhülsen weisen eine erste Spreizzone mit einem Schlitz 6 auf und eine zweite Spreizzone mit zwei Flügeln 7. Die Flügel 7 stehen aus der Dübelhülse heraus und können in den Ausnehmungen 8 aufgenommen werden. In der geschnittenen Darstellung ist die "Einschlagsicherung" 12 dargestellt.

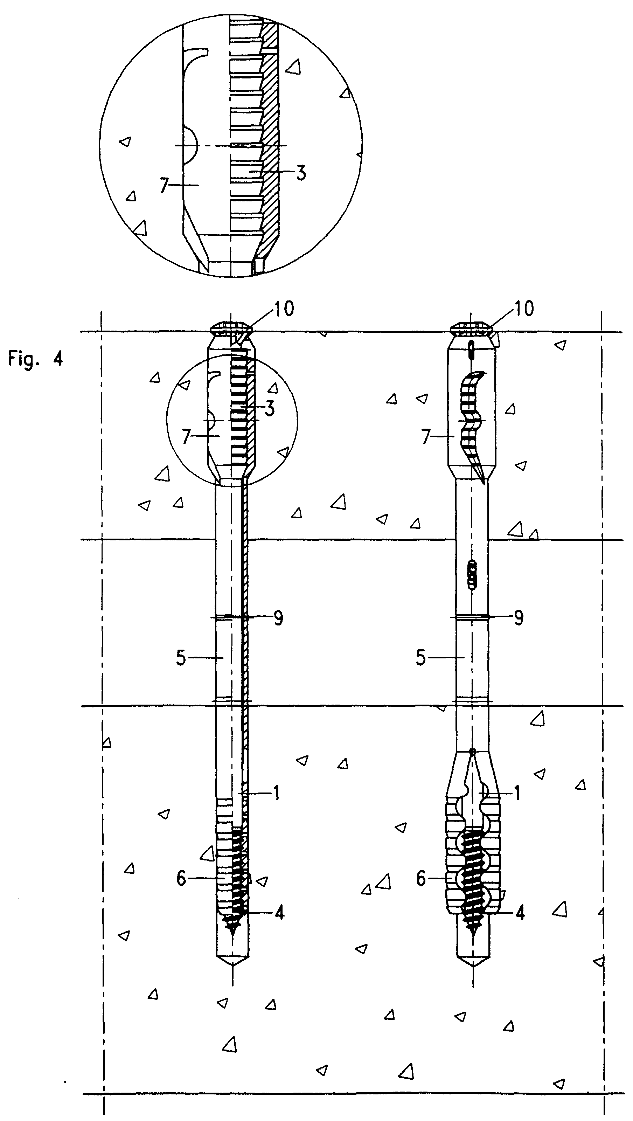

In Fig. 4 sind die Dübelhülsen 5 von Fig. 3 mit vollständig eingeschraubten Spreizelementen 1 aus Fig. 2 dargestellt. Die beiden dargestellten Dübel sind in einem zweischaligen Mauerwerk verankert und zueinander in einem Winkel von 90° verdreht. Zwischen zwei Werkstoffschichten, nämlich der tragenden Wand und der Fassade, befindet sich ein Hohlraum. Die zweite Spreizzone 7 der Dübelhülse 5 ist von der ersten Spreizzone 6 beabstandet. Dazwischen befindet sich ein Schaftbereich ohne Spreizzone. In dieser Zone der Dübelhülse ist ein Bereich zum Abtropfen von Wasser, z.B. ein Paar von Abtropflippen 9 so angeordnet, daß sich dieselben im Hohlraum befinden. An den Abtropflippen kann sich Kondenswasser sammeln und nach unten abtropfen, anstatt unerwünschterweise in die Werkstoffschichten einzudringen. Weiter ist aus Fig. 4 der formschlüssige Verbund zwischen der zweiten Spreizzone 7 der Dübelhülse - der "Flügelspreizzone" - und dem zweiten kunststoffumspritzten Spreizabschnitt 3 des Spreizelementes erkennbar. Die Kunststoffumspritzung/Profilierung in dem zweiten Spreizabschnitt 3 des Spreizelementes 1 wird so gestaltet, daß Lasten, hier Druckkräfte, aufgenommen werden. Weiterhin ist nochmals deutlich dargestellt, daß der zweite Spreizabschnitt 3 des Spreizelementes 1, der für die zweite Spreizzone 7 der Dübelhülse 5 vorgesehen ist, einen größeren Durchmesser ohne Gewinde zum axialen Vorschub aufweist. Dadurch wird beim Eindrehen des Spreizelementes 1 verhindert, daß das Spreizelement in die zweite Spreizzone 7 der Dübelhülse 5 eingeschraubt werden kann. Hierdurch wird eine Probe, ob der erste Spreizabschnitt 4 des Spreizelementes 1, den Dübel in der tragenden Wand zuverlässig verankert, ermöglicht.

Weiter ist aus Fig. 4 erkennbar, daß die Spreizwirkung vom zweiten Spreizabschnitt 3 und vom ersten Spreizabschnitt 4 etwa eine Vierteldrehung versetzt zueinander wirksam werden.

Weiterhin ist dargestellt, daß der Kopf 10 des Spreizelementes 1 in den Baustoff eingezogen montiert worden ist; dies wird durch die am Kopf 10 angebrachte Profilierung erreicht, die bei drehender Einschraubbewegung Material des Baustoffes abtragen kann.

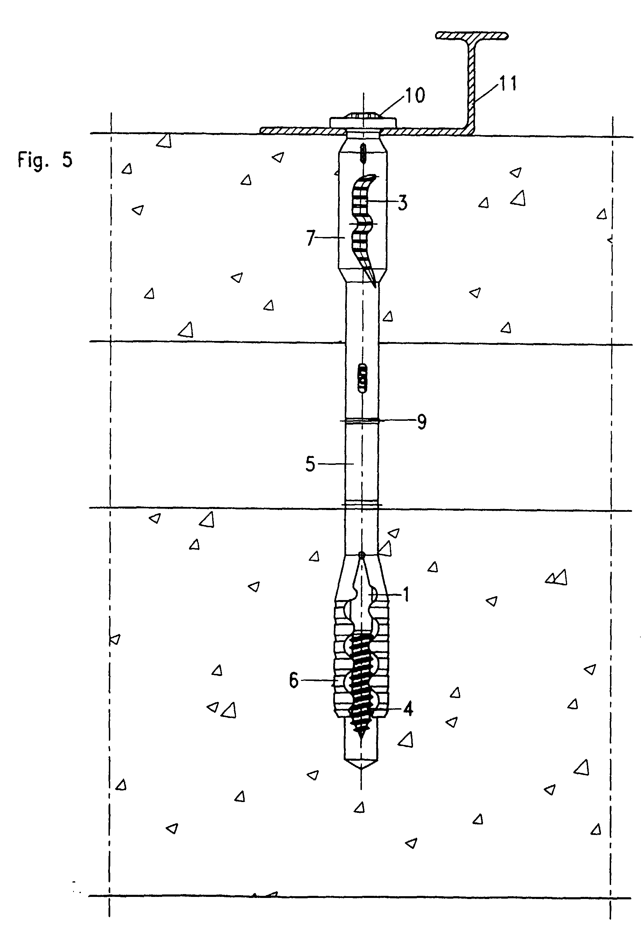

In Fig. 5 ist ein erfindungsgemäßes Dübelsystem, versehen mit einem Kragenkopf 11 dargestellt. Mit Hilfe des Kragenkopfes lassen sich Anbauteile, wie z.B. Halteschienen von Wärmedämm-Verbundsystemen befestigen.

## Patentansprüche

1. Dübelsystem, aufweisend eine Dübelhülse (5) mit einer ersten (6) und einer zweiten Spreizzone (7), insbesondere zur Anwendung bei zweischaligen Mauerwerken, und ein Spreizelement (1) mit einem Kopf und mit einem ersten Spreizabschnitt (4), der mit einem Gewinde versehen ist und mit einem zweiten, dem Kopf zugewandten Spreizabschnitt (3), wobei im montierten Zustand die erste Spreizzone (6) mit dem ersten Spreizabschnitt (4) unter Erzielung einer Spreizwirkung zusammenwirkt, und die zweite Spreizzone (7) mit dem zweiten Spreizabschnitt (3) unter Erzielung einer Spreizwirkung zusammenwirkt, wobei zwischen der zweiten Spreizzone (7) und dem zweiten Spreizabschnitt (3) keine axiale Unverschiebbarkeit erreicht wird, und der zweite Spreizabschnitt (3) durch einen Bereich vergrößerten Durchmessers gebildet ist,
dadurch gekennzeichnet,
daß der zweite Spreizabschnitt (3) so ausgebildet ist, daß dieser beim Einschrauben des ersten Spreizabschnittes (4) in die erste Spreizzone (6) nur durch die Zugkraftwirkung des mit dem Gewinde versehenen ersten Spreizabschnittes (4) des Spreizelementes (1) in die zweite Spreizzone (7) eingezogen wird.

2. Dübelsystem nach Anspruch 1, dadurch gekennzeichnet, daß der zweite Spreizabschnitt (3) des Spreizelementes (1) eine Profilierung in Form von Rillen, insbesondere umlaufenden, vorzugsweise äquidistanten Rillen, aufweist.

3. Dübelsystem nach einem der vorhergehenden Ansprüche, dadurch gekennzeichnet, daß die Dübelhülse (5) eine zylindrische Hülse ist, die aufweist: eine erste, geschlitzte Spreizzone (6); eine zweite Spreizzone (7) mit Ausnehmungen und Vorsprüngen, die vor dem Einführen des Spreizelementes (1) derart in den Ausnehmungen versenkbar sind, daß sie in die Bohrung der Hülse hineinragen.

4. Dübelsystem nach Anspruch 3, gekennzeichnet durch eine zweite Spreizzone (7) mit Vorsprüngen, die als Flügel ausgeformt sind, wobei die Flügel entlang einer im wesentlichen, parallel zur Dübelachse verlaufenden Schwenkachse derart verschwenkbar sind, daß sie vor dem Einführen eines stabartigen Spreizelementes (1) in die Bohrung der Hülse (5) derart in den Ausnehmungen versenkbar sind, daß sie in die Bohrung der Hülse hineinragen, und daß sie nach dem Einführen des Spreizelementes von diesem in ihrer Spreizposition gehalten werden.

5. Dübelsystem nach dem vorhergehendem Anspruch, gekennzeichnet durch Flügel, die im wesentlichen in axialer Richtung an der Hülse angeformt sind und in ihrer Spreizposition in Umfangrichtung hervorspringen.

6. Dübelsystem nach einem der Ansprüche 4 oder 5, dadurch gekennzeichnet, daß die Breite der Flügel in Umfangrichtung zwischen 1/7 und 1/3 des Umfanges der Hülse beträgt.

7. Dübelsystem nach einem der Ansprüche 4 bis 6, dadurch gekennzeichnet, daß die Länge der von der Hülse in Umfangrichtung vorspringenden Kante eines Flügels größer als der Außendurchmesser der Hülse ist.

8. Spreizelement (1) für eine Dübelhülse (5) mit einer ersten und einer weiten Spreizzone (6, 7), das einen Kopf, einen ersten Spreizabschnitt (4), der mit einem Gewinde versehen ist und einen zweiten, dem Kopf zugewandten Spreizabschnitt (3) aufweist, wobei bei Zusammenwirken des zweiten, dem Kopf zugewandten Spreizabschnitts (3) mit der zweiten Spreizzone (7) der Dübelhülse keine axiale Unverschiebbarkeit zwischen dem zweiten Spreizabschnitt und der zweiten Spreizzone erreicht wird, dadurch gekennzeichnet, daß der zweite Spreizabschnitt (3) ein zumindest teilweise gewindefreier Spreizabschnitt mit größerem Außendurchmesser als der Durchmesser des freien Innenraums der zweiten Spreizzone (7) ist.

9. Spreizelement (1) nach Anspruch 23, dadurch gekennzeichnet, daß die zweite Spreizzone (3) wie in einem der auf ein Dübelsystem gerichteten Ansprüche definiert aufgebaut ist.

10. Verfahren zur Befestigung von Fassadenabschnitten an tragenden Wänden und zur gleichzeitigen Montagekontrolle, dadurch gekennzeichnet, daß
a) eine Dübelhülse (5) mit zwei Spreizzonen (6, 7) durch eine Öffnung in der Fassade hindurch in eine Öffnung in der tragenden Wand derart eingeführt wird, daß die erste Spreizzone (6) der Dübelhülse (5) innerhalb der Öffnung der tragenden Wand und die zweite Spreizzone (7) der Dübelhülse (5) innerhalb der Öffnung in der Fassade angeordnet ist,
b) ein Spreizelement (1) mit einem ersten Spreizabschnitt (4), der mit Gewinde versehen ist, in die erste Spreizzone (6) der Dübelhülse (5) geschraubt wird, wodurch ein zweiter, dem Kopf des Spreizelementes zugewandter Spreizabschnitt (3) des Spreizelementes in die zweite Spreizzone (7) der Dübelhülse gezogen, und so
c) die zweite Spreizzone (7) der Dübelhülse aufgeweitet und in festen Kontakt mit der Fassade gebracht wird, wobei gleichzeitig
d) die erste Spreizzone (6) der Dübelhülse aufgeweitet und in festen Kontakt mit der tragenden Wand gebracht wird.
